# EUROPÄISCHE PATENTSCHRIFT

(11) **EP 0 996 876 B1**
(45) Veröffentlichungstag und Bekanntmachung des Hinweises auf die Patenterteilung: **01.02.2006**
(21) Anmeldenummer: 98941240.8
(22) Anmeldetag: 26.06.1998
(51) Int. Cl.: G05B 19/408, G05B 19/4155

(54) **NUMERISCHE STEUERUNG FÜR WERKZEUGMASCHINEN, ROBOTER ODER DERGLEICHEN**
NUMERICAL CONTROL FOR MACHINE-TOOLS, ROBOTS OR THE LIKE
COMMANDE NUMERIQUE DE MACHINES-OUTILS, ROBOTS OU ANALOGUES

(30) Priorität: 11.07.1997 DE 29712266 U
(43) Veröffentlichungstag der Anmeldung: 03.05.2000
(73) Patentinhaber: SIEMENS AKTIENGESELLSCHAFT, 80333 München (DE)
(72) Erfinder: FRIEDRICH, Ralf, D-91074 Herzogenaurach (DE); PESCHKE, Stefan, D-41541 Dormagen (DE); JENNESSEN, Johannes, D-41366 Schwalmtal (DE)
(86) Internationale Anmeldenummer: PCT/DE1998/001769
(87) Internationale Veröffentlichungsnummer: WO 1999/003025

(56) Entgegenhaltungen:
- DE-A- 4 321 631
- PATENT ABSTRACTS OF JAPAN vol. 018, no. 235 (P-1732), 28. April 1994 & JP 06 020206 A (VICTOR CO OF JAPAN LTD), 28. Januar 1994

## Beschreibung

Die Erfindung betrifft eine numerische Steuerung für Werkzeugmaschinen, Roboter oder dergleichen mit Ansteuerungsmöglichkeit durch ein Bearbeitungsprogramm mit werkzeugbezogenen Arbeitsgängen und Positionselementen.

Insbesondere in der Einzelteil- und Kleinserienfertigung von Werkstücken mit numerisch gesteuerten Werkzeugmaschinen oder Robotern stellt der Vorgang der Programmierung einer numerischen Steuerung einen wesentlichen Kostenfaktor dar, weil auch heute noch vor allem bei kleineren Fertigungsbetrieben im Rahmen der werkstattorientierten Programmierung noch überwiegend an der Werkzeugmaschine programmiert wird. Dabei addieren sich Programmierzeiten und Maschinenstillstandszeiten zu einem beträchtlichen Anteil an den Stückkosten der hergestellten Werkstücke.

Ein wesentlicher Nachteil heutiger numerischer Steuerungen und ihrer Programmiersprachen ist die Bedingung an den Satzaufbau nach DIN66025, der zum einen grundlegende Kenntnisse in der Bedeutung der G- und M-Funktionen voraussetzt, zum anderen aber auch die Beherrschung des jeweiligen Steuerungsdialektes verlangt. Somit ergeben sich mit der Anschaffung einer numerisch gesteuerten Werkzeugmaschine oder eines solchen Roboters neuerer Generation nicht nur kostenintensive Aufwendungen für die Schulung eines Mitarbeiters, sondern es wird auch jedesmal ein neuer Spezialist ausgebildet, dessen Funktion bei einem Ausfall nur eingeschränkt oder gar nicht von seinen Kollegen übernommen werden kann, da herkömmlicherweise die Steuerung des Ablaufs eines Bearbeitungsvoranges vom Programmierer zum Zeitpunkt der Programmerstellung bestimmt wird.

Diese herkömmliche Programmiermethode soll im folgenden anhand eines Beispieles näher erläutert werden:

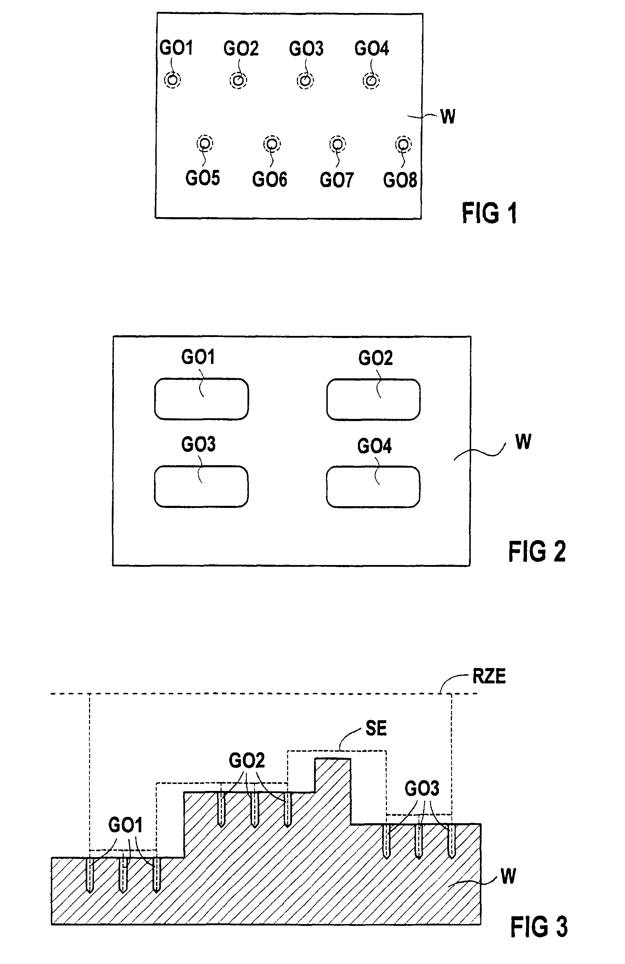

In der Darstellung gemäß FIG 1 ist ein Werkstück W gezeigt, in das verschiedene Innengewinde eingebracht werden sollen. Die Bearbeitungsschritte werden im folgenden als Arbeitsgänge bzw. Bearbeitungsobjekte bezeichnet, die Positionen als Positionselemente bezeichnet. Dementsprechend sind die genannten Innengewinde an den Positionselementen GO1 bis GO4 sowie GO5 bis GO8 bezeichnet, welche jeweils eine Lochreihe mit vier auf einer Linie liegenden Löchern beschreiben.

Eine abgeschlossene Folge von Arbeitsgängen und Positionen beschreibt eine Bearbeitungsaufgabe. Eine Folge gilt als abgeschlossen, wenn mindestens einem Bearbeitungsgang mindestens ein Positionselement folgt.

Um mit einer Werkzeugmaschine ein Gewinde gemäß FIG 1 zu bohren, müssen prinzipiell folgende Bearbeitungsschritte durchgeführt werden:
1. Mit einem Zentrierbohrer zentrieren
   - auf den Positionen der Lochreihe 1
   - auf den Positionen der Lochreihe 2
2. Mit dem Kernlochbohrer bohren
   - auf den Positionen der Lochreihe 1
   - auf den Positionen der Lochreihe 2
3. Mit dem Gewindeschneider ein Gewinde schneiden
   - auf den Positionen der Lochreihe 1
   - auf den Positionen der Lochreihe 2.

Bei den mit 1., 2. und 3. gekennzeichneten Bearbeitungsschritten handelt es sich somit um einzelne Arbeitsgänge, welche an den Positionselementen ausgeführt werden.

Herkömmlicherweise wird eine solche werkzeugbezogene Bearbeitung durch Erzeugen eines CNC-Programms gelöst. In einem CNC-Bearbeitungsprogramm werden die Arbeitsgänge in Form von modal wirkenden Zyklen aufgerufen, danach werden die Positionselemente in Form von Positionen angegeben (vgl. vorangehendes Beispiel). Da die Zyklen modal wirken, werden sie von der Werkzeugmaschine beim Bearbeitungsprogrammablauf an jeder folgenden Position ausgeführt. Die Erzeugung eines CNC-Bearbeitungsprogramms kann durch direktes Erstellen des Programms an der Maschine durch den Werker oder aber auch durch einen Postprozessorlauf aus einem CAD/CAM-Programm erfolgen. Die Steuerung des Ablaufs wird somit vom Programmierer oder vom CAD/CAM-System zum Zeitpunkt der Programmerstellung bestimmt.

Aus diesem Grund ist die Steuerung des Ablaufs und damit verbunden auch die Dauer des Bearbeitungsprozesses im starken Maße vom Können und der Erfahrung des programmierenden Werkers an der Maschine abhängig. Damit verbunden kann es - je nach Grad der Optimierung des Bearbeitungsvorganges im Hinblick auf das Bearbeitungsprogramm - auch zu einem mehrfachen Wechsel jedes Werkzeuges kommen.

Aus der deutschen Offenlegungsschrift DE 33 21 631 A1 ist ein Verfahren zur Erzeugung von Steuerdaten aus einem in Form von jeweils mindestens eine Programmanweisung enthaltenden Programmsätzen abgefassten NC-Programmm für eine numerisch gesteuerte Maschine bekannt. Im voraus werden dazu zunächst die NC-Funktionalitäten der im NC-Programm verwendeten Programmabweisungen, die zur Realisierung jeder NC-Funktionalität erforderlichen Einzelmaßnahmen sowie deren Ausführungsreihenfolge festgelegt. Die Zuordnungen von Programmanweisungen zu NC-Funktionalitäten werden in einer Syntaxtabelle, die Zuordnungen von Einzelnmaßnahmen zu NC-Funktionalitäten in einerFunktionstabelle, die Ausführungsreihenfolge aller Einzelmaßnahme in einer Jobtabelle abgelegt. Mit den Tabellen erfolgt anschließend die Steuerdatenerzeugung. Jeder Programmanweisung des NC-Programms wird entsprechend der Syntaxtabelle eine Funktionalität zugeordnet, dieser wiederum gemäß Funktionstabelle eine Einzelmaßnahme. Alle enthaltenen Einzelmaßnahmen werden abgespeichert und anschließend in ausführbare Maschinenanweisungen umgesetzt.

Der vorliegenden Erfindung liegt die Aufgabe zugrunde, den Ablauf einer Bearbeitungsaufgabe so zu steuern, daß die angegebenen Arbeitsgänge auf allen Positionselementen so durchgeführt werden, daß jedes Werkzeug nur einmal eingewechselt wird. Auf diese Weise soll stets gewährleistet sein, daß unabhängig von der Fähigkeit des programmierenden Werkers die Stückzeit optimiert und somit die Produktivität verbessert wird.

Zur Lösung dieser Aufgabe wird die numerische Steuerung nach dem Oberbegriff des Anspruches 1 dadurch weitergebildet, daß die numerische Steuerung durch Verwendung von Zyklen eine Ablaufsteuerung umfaßt, nach der für jede Bearbeitungsaufgabe zugehörige Arbeitsgänge und Positionselemente abhängig von ihrer technologieabhängigen Reihenfolge im Bearbeitungsprogramm so abarbeitbar sind, daß alle Zyklen für einen Arbeitsgang jeweils als modaler Zyklus ausgewählt werden, wobei für jeden Zyklus für ein Bearbeitungsobjekt nacheinander alle Zyklen für ein Positionselement ausgewählt werden und jeweils eine Bearbeitung des entsprechenden Arbeitsganges an der Position des jeweiligen Positionselements erfolgt, bevor der folgende Zyklus für einen Arbeitsgang als modaler Zyklus ausgewählt wird.

In einer ersten vorteilhaften Weiterbildung der numerischen Steuerung gemäß der vorliegenden Erfindung wird eine besonders effiziente Realisierung der genannten Ablaufsteuerung erreicht, indem ein Bearbeitungspuffer vorgesehen ist, in den für jede Bearbeitungsaufgabe die Daten der zugehörigen Bearbeitungsobjekte und Positionselemente einschreibbar sind. Dies kann insbesondere zur Laufzeit des Bearbeitungsprogrammes geschehen.

In einer weiteren vorteilhaften Ausgestaltung der numerischen Steuerung gemäß der vorliegenden Erfindung wird erreicht, daß die erfindungsgemäße Ablaufsteuerung zum Zeitpunkt der Programmbearbeitung ausgeführt werden kann. Dies geschieht dadurch, daß die Ablaufsteuerung zum Zeitpunkt der Bearbeitungsprogrammabarbeitung im Echtzeitbetrieb arbeitet. Dies kann durch Interpretation des Bearbeitungspuffers und Steuerung nach dem geschilderten Ablauf geschehen.

Eine weitere vorteilhafte Ausgestaltung erleichtert desweiteren die Beschreibung geometrischer Strukturen, indem Positionselemente auch Positionsmuster, insbesondere Positionsreihen, Positionsgitter oder Positionskreise, sowie Hindernisse beschreiben können.

In einer weiteren vorteilhaften Ausgestaltung der numerischen Steuerung gemäß der vorliegenden Erfindung wird darüber hinaus eine Verfahrwegoptimierung in der Werkzeugachse ermöglicht. Dies wird dadurch erreicht, daß durch die Ablaufsteuerung für auf unterschiedlichen Höhen liegende Positionselemente in den Zyklen Rückzugsbewegungen auf eine globale Rückzugebene vermeidbar sind, indem Rückpositionierungen nur bis auf eine lokale Sicherheitsebene des höher gelegenen Positionselementes erfolgen.

In einer weiteren vorteilhaften Ausgestaltung der numerischen Steuerung gemäß der vorliegenden Erfindung wird darüber hinaus eine effektivere Realisierung von Bearbeitungsprogrammen ermöglicht. Dies wird dadurch erreicht, daß Positionselemente für unterschiedliche Arbeitsgänge mehrfach nutzbar sind.

Weitere Einzelheiten und Vorteile der vorliegenden Erfindung ergeben sich anhand der folgenden Darstellung von vorteilhaften Ausführungsbeispielen in Zusammenhang mit den Figuren. Dabei sind Elemente mit gleicher Funktionalität in verschiedenen Figuren mit gleichen Bezugszeichen gekennzeichnet. Es zeigen:
- FIG 1: technologische Aufgabe des Einbringens von Innengewinden in ein Werkstück,
- FIG 2: technologische Aufgabe des Fräsens von vier gleichen Taschen mit einem Schrup- und Schlichtwerkzeug und
- FIG 3: Verfahrwegoptimierung in der Werkzeugachse anhand eines Werkstückes mit Positionselementen unterschiedlicher Höhe.

Die Darstellung gemäß FIG 1 wurde bereits eingangs anhand des dort angeführten herkömmlichen Bearbeitungsprogrammes geschildert. Ein solches NC-Bearbeitungsprogramm in herkömmlicher Technik soll im folgenden vom prinzipiellen Ablauf angegeben werden, wobei nicht mit einer konkreten Syntax gearbeitet wird, da die Syntax bei unterschiedlichen Steuerungsherstellern unterschiedlich ist. Für die in der Darstellung gemäß FIG 1 gezeigte technologische Bearbeitungsaufgabe des Einbringens von Innengewinden in ein Werkstück W in Form einer ersten Lochreihe mit Positionen 1 bis 4, welche Positionen GO1 bis GO4 darstellen, und einer zweiten Lochreihe mit Positionen 1 bis 4, welche Positionen GO5 bis GO8 darstellen, sieht das NC-Programm in herkömmlicher Technik vom prinzipiellen Ablauf somit wie folgt aus:
- N30: Werkzeugwechsel Zentrierbohrer
- N40: Zyklus für zentrieren (modal)
- N50: 1. Position 1. Lochreihe
- N60: 2. Position 1. Lochreihe
- N70: 3. Position 1. Lochreihe
- N80: 4. Position 1. Lochreihe
- N90: 1. Position 2. Lochreihe
- N100: 2. Position 2. Lochreihe
- N110: 3. Position 2. Lochreihe
- N120: 4. Position 2. Lochreihe
- N130: Werkzeugwechsel Kernlochbohrer
- N140: Zyklus für bohren (modal)
- N150: 1. Position 1. Lochreihe
- N160: 2. Position 1. Lochreihe
- N170: 3. Position 1. Lochreihe
- N180: 4. Position 1. Lochreihe
- N190: 1. Position 2. Lochreihe
- N200: 2. Position 2. Lochreihe
- N210: 3. Position 2. Lochreihe
- N220: 4. Position 2. Lochreihe
- N230: Werkzeugwechsel Gewindebohrer
- N240: Zyklus für gewindebohren (modal)
- N250: 1. Position 1. Lochreihe
- N260: 2. Position 1. Lochreihe
- N270: 3. Position 1. Lochreihe
- N280: 4. Position 1. Lochreihe
- N290: 1. Position 2. Lochreihe
- N300: 2. Position 2. Lochreihe
- N310: 3. Position 2. Lochreihe
- N320: 4. Position 2. Lochreihe
- N330: Modalen Zyklus ausschalten

Um zu vermeiden, daß Positionen mehrfach geschrieben werden müssen, können die Positionen auch in Unterprogramme geschrieben und diese dann aufgerufen werden:
- N30: Werkzeugwechsel Zentrierbohrer
- N40: Zyklus für zentrieren(modal)
- N50: Call UP4711
- N60: Werkzeugwechsel Kernlochbohrer
- N70: Zyklus für bohren (modal)
- N80: Call UP4711
- N90: Werkzeugwechsel Gewindebohrer
- N100: Zyklus für gewindebohren (modal)
- N110: Call UP4711
- N120: Modalen Zyklus ausschalten
- ...:
- UP4711:
- N10: 1. Position 1. Lochreihe
- N20: 2. Position 1. Lochreihe
- N30: 3. Position 1. Lochreihe
- N40: 4. Position 1. Lochreihe
- N50: 1. Position 2. Lochreihe
- N60: 2. Position 2. Lochreihe
- N70: 3. Position 2. Lochreihe
- N80: 4. Position 2. Lochreihe

Zu diesem herkömmlichen Verfahren gibt es darüber hinaus die erweiterte Möglichkeit, die Sequenz eines Unterprogrammes zwischen zwei Marken im Hauptprogramm zu schreiben und über diese Marken aufzurufen.

Mit der vorliegenden Erfindung ist es nunmehr möglich, daß jeder Arbeitsgang, welche in dem zugrundeliegenden Beispiel die Vorgänge Zentrierbohren, Kernlochbohren, Gewindebohren sind, und jedes Positionselement durch genau einen Zyklenaufruf abgebildet werden. Die Ablaufsteuerung wird dabei nicht zum Zeitpunkt der Programmerstellung, sondern zum Zeitpunkt der Programmbearbeitung in Echtzeit ausgeführt. Hierfür wird in die Zyklen der numerischen Steuerung eine entsprechende Ablaufssteuerungslogik implementiert, die während der Programmbearbeitung nach bestimmten Regeln den Programmablauf steuert. Diese Regeln sollen im folgenden für die der Darstellung gemäß FIG 1 zugrundeliegende Überarbeitungsaufgabe dargestellt werden:
- N20: Zyklus für zentrieren
- N30: Zyklus für bohren
- N40: Zyklus für gewinde
- N50: Zyklus für 1. Position 1. Lochreihe
- N60: Zyklus für 2. Position 1. Lochreihe
- N70: Zyklus für 3. Position 1. Lochreihe
- N80: Zyklus für 4. Position 1. Lochreihe
- N90: Zyklus für 1. Position 2. Lochreihe
- N100: Zyklus für 2. Position 2. Lochreihe
- N110: Zyklus für 3. Position 2. Lochreihe
- N120: Zyklus für 4. Position 2. Lochreihe

Durch die Verlagerung der Ablaufsteuerung für eine beispielsweise Bohrbearbeitungsaufgabe oder Fräsbearbeitungsaufgabe in die Zyklen der numerischen Steuerung wird erreicht, daß der Programmierer von der Verwaltung des Ablaufes weitgehend befreit wird. Da die Verwaltung dann bereits durch die Logik der numerischen Steuerung realisiert wird, ergeben sich weitere Möglichkeiten einer automatischen Optimierung durch die numerische Steuerung, die im folgenden noch erläutert werden.

Durch die Logik der Ablaufsteuerung wird das Bearbeitungsprogramm gemäß der vorliegenden Erfindung folgendermaßen abgearbeitet. In den Datensätzen N20 bis N120 werden die entsprechenden Daten in einen Bearbeitungspuffer B geschrieben. Im Anschluß daran wird ein Managementzyklus MZ zur Ablaufsteuerung gestartet, welcher im Bearbeitungspuffer B nach dem ersten Zyklus für einen Arbeitsgang TO1 sucht und diesen Zyklus als modalen Zyklus anwählt. Der Managementzyklus MZ sucht im Bearbeitungspuffer B darauf nach dem ersten Zyklus für ein Positionselement GO1 und ruft diesen Zyklus auf. Die Bearbeitung des ersten Arbeitsganges TO1 wird daraufhin an der Geometrie des ersten Positionselementes GO1 am Werkstück W ausgeführt. Darauf sucht der Managementzyklus MZ im Bearbeitungspuffer B nach dem nächsten Zyklus für ein Positionselement GO2 und ruft diesen Zyklus auf. Die Bearbeitung des ersten Technologieobjektes TO1 wird daraufhin an der Geometrie GO2 am Werkstück W ausgeführt. Nach diesem Prinzip wird weiter für alle anderen Positionselemente GO3 bis GOm (im vorliegenden Fall GO8) der Bearbeitungsaufgabe fortgefahren. Nach dem letzten Zyklus eines Positionselementes GOm sucht der Managementzyklus MZ nach dem nächsten Zyklus eines Arbeitsganges TO2 und verfährt wie zuvor.

Wenn kein Arbeitsgang TO1...TOn oder Positionselement GO1...GOm mehr vorhanden ist, schaltet der Managementzyklus MZ den letzten modalen Zyklus aus und löscht den Bearbeitungspuffer B für die nächste Bearbeitungsaufgabe.

In der Darstellung gemäß FIG 2 ist ein weiteres Ausführungsbeispiel der Erfindung anhand der technologischen Aufgabe des Fräsens von vier gleichen Taschen in einem Werkstück W gezeigt. Die genannten Taschen stellen die Positionselemente GO1 bis GO4 dar. Zum Einsatz gelangen ein Schruppwerkzeug und ein Schlichtwerkzeug, welche die Arbeitsgänge TO1 und TO2 darstellen. Das dafür erforderliche CNC-Bearbeitungsprogramm gemäß der vorliegenden Erfindung sieht folgendermaßen aus:
- N30: Zyklus für Tasche schruppen
- N40: Zyklus für Tasche schlichten
- N50: Zyklus für 1. Position
- N60: Zyklus für 2. Position
- N70: Zyklus für 3. Position
- N80: Zyklus für 4. Position

Darüber hinaus lassen sich durch die Ablaufsteuerung im Rahmen der numerischen Steuerung gemäß der vorliegenden Erfindung weitere Optimierungen erreichen. Zum einen können Zyklen für Positionsmuster als Positionselemente definiert werden. Dementsprechend können Positionselemente GO1 bis GOm auch Positionsmuster sein wie Positionsreihen (vergleiche erstes Ausführungsbeispiel), Positionsgitter, Positionskreise oder Positionsfolgen. Damit vereinfacht sich das der Darstellung gemäß FIG 1 zugrundeliegende Ausführungsbeispiel wie folgt:
- N20: Zyklus für zentrieren
- N30: Zyklus für bohren
- N40: Zyklus für gewinde
- N50: Zyklus für 1. Lochreihe
- N60: Zyklus für 2. Lochreihe

Darüber hinaus läßt sich eine Verfahrwegoptimierung in der Werkzeugachse erreichen. Wenn die Positionselemente GO1 bis GOm auf unterschiedlichen Höhen liegen, kann die Ablaufsteuerung MZ in den Zyklen solche Positionselemente derart berücksichtigen, daß sie die sonst üblichen Rückzugsbewegungen automatisch unterdrückt.

In der Darstellung gemäß FIG 3 ist ein Werkstück W mit Positionselementen GO1 bis GO3 gezeigt, welche jeweils Lochreihen darstellen. Diese Positionselemente liegen auf unterschiedlichen Höhen, was anhand der Darstellung gemäß FIG 3 dadurch deutlich wird, daß eine Schnittansicht des Werkstückes W abgebildet ist.

Prinzipiell ist eine globale Rückzugsebene RZE vorgesehen, welche herkömmlicherweise durch die Ablaufsteuerung durch Rückzugsbewegungen angefahren wird oder vom Programmierer in den Ablauf eingebracht wird, bevor eine Zustellbewegung zu einem folgenden Positionselement erfolgt. Durch den neuartigen Zyklus gemäß der vorliegenden Erfindung werden nunmehr überflüssige Zustell- und Rückzubewegungen der Werkzeuge elliminiert, wodurch die Produktivität weiter verbessert werden kann.

Herkömmlicherweise befinden sich z.B. mehrere Bohrmuster mit gleichem Lochdurchmesser auf unterschiedlichen Höhen, wie in der Darstellung gemäß FIG 3 gezeigt. Daher fährt herkömmlicherweise (wenn vom Programmierer nicht explizit anders angegeben) das Bohrwerkzeug von der Rückzugebene RZE aus im Eilgang bis auf einen Sicherheitsabstand zur Werkstückoberfläche. Von dort aus wird das Bohrmuster bearbeitet. Anschließend fährt das Werkzeug im Eilgang auf die Rückzugebene RZE zurück, fährt über das neue Bohrmuster (Positionselement) und stellt im Eilgang auf den neuen Sicherheitsabzustand zu. Diese Lehrfahrten sind zeitaufwendig. Erfindungsgemäß fährt daher das Werkzeug nur einmal im Eilgang auf den Sicherheitsabstand entsprechend einer jeweils am Positionselement zugeordneten Sicherheitsebene SE, welche in der Darstellung anhand eines punktierten Verlaufes über die Werkstückkontur dargestellt ist. Nach der Bearbeitung des ersten Bohrmusters springt das Werkzeug im Eilgang auf den Sicherheitsabstand entsprechend der Sicherheitsebene SE des zweiten Bohrmusters bzw. Positionselementes usw. Die Ablaufsteuerung positioniert somit selbst nur bis auf die Sicherheitsebene des höhergelegenen Positionselementes.

Auch die Zustellung innerhalb von Arbeitsgängen ist optimiert. Bei Verfahrbewegungen innerhalb eines Positionsmusters bzw. Positionselementes wird nur auf den Sicherheitsabstand zurückgezogen. Vor dem Wechsel auf ein anderes Positionsmuster bzw. Positionselement wird jedoch gegebenenfalls auf den Sicherheitsabstand dieses Positionsmusters zurückgezogen. Am Ende eines Arbeitsganges wird wieder auf die Rückzugsebene RZE zurückgezogen.

Ein diesbezüglich mögliches CNC-Bearbeitungsprogramm gemäß der vorliegenden Erfindung kann dabei folgendermaßen aussehen:
CNC-Programm (Prinzip)
- ...:
- N20: Zyklus für zentrieren
- N30: Zyklus für bohren
- N40: Zyklus für gewinde
- N50: Zyklus für 1. Lochreihe Höhe 5 mm
- N60: Zyklus für 2. Lochreihe Höhe 5 mm
- N70: Zyklus für Lochgitter Höhe 10 mm
- ...:

Die erfindungsgemäße Ablaufsteuerung läßt sich darüber hinaus zur Optimierung weiterer technologischer Gegebenheiten einsetzen, beispielsweise zum Umfahren von Hindernissen.

Werkstücke werden oft mit Spannbacken auf den Arbeitstisch gespannt, weil es vorkommen kann, daß innerhalb einer Bearbeitungsaufgabe eine Spannbacke ein Hindernis darstellt, welches umfahren werden muß. Aus diesem Grund können zwischen Positionselementen einer Bearbeitungsaufgabe Hindernisse als Positionselemente eingefügt werden. Ein Hindernis wird über seine Höhe (Ausdehnung in der Werkzeugachse) bestimmt. Bei der Abarbeitung wird das Hindernis von der Ablaufsteuerung erkannt und in der Werkzeugachse unter Einhaltung des Sicherheitsabstandes wie anläßlich des Ausführungsbeispiels gemäß der Darstellung nach FIG 3 umfahren.

Ein daraufhin optimiertes CNC-Bearbeitungsprogramm gemäß der vorliegenden Erfindung kann beispielsweise folgendermaßen aussehen:
CNC-Programm (Prinzip)
- ...:
- N20: Zyklus für zentrieren
- N30: Zyklus für bohren
- N50: Zyklus für 1. Position
- N60: Zyklus für Hindernis H=50 mm
- N70: Zyklus für 2. Position
- N80: Zyklus für 3. Position
- N90: Zyklus für Hindernis H=50 mm
- N100: Zyklus für 4. Position
- ...:

Darüber hinaus ist es möglich, Positionselemente mehrfach zu nutzen. Es kommt häufig vor, daß ein Werkzeug in mehreren Bearbeitungsaufgaben zum Einsatz gelangt (z.B. wird der gleiche Zentrierbohrer für die Zentrierung von unterschiedlichen Bohrungen verwendet). D.h., daß Arbeitsgängen auch Positionselemente aus anderen Bearbeitungsaufgaben zugeordnet sein können. Aus diesem Grund werden Geometrieelemente beispielsweise automatisch numeriert und bei Bedarf mit ihrer Nummer aus einer anderen Bearbeitungsaufgabe aufgerufen werden. Wird ein bereits definiertes Positionselement über seine Nummer eingefügt, wirkt es genauso, wie wenn es direkt in das Bearbeitungsobjekt eingefügt worden wäre.

Ein diesbezüglich optimiertges CNC-Bearbeitungsprogramm gemäß der vorliegenden Erfindung kann beispielsweise folgenden Aufbau besitzen:
CNC-Programm (Prinzip)
- ...:
- N20: Zyklus für zentrieren
- N30 001:: Zyklus für 1. Lochreihe Höhe 5 mm
- N40 002:: Zyklus für 2. Lochreihe Höhe 5 mm
- N50 003:: Zyklus für Lochgitter Höhe 10 mm

- N60: Zyklus für bohren 5,5 mm
- N70: "Wiederhole" Geometrie 003

- N80: Zyklus für bohren Kernloch M5
- N90: Zyklus für gewinde
- N100: "Wiederhole" Geometrie 001
- N110: "Wiederhole" Geometrie 002
- ...:

## Patentansprüche

1. Numerische Steuerung für Werkzeugmaschinen, Roboter oder dergleichen mit Ansteuerungsmöglichkeit durch ein Bearbeitungsprogramm mit werkzeugbezogenen Arbeitsgängen (TO1...TOn) und Positionselementen (GO1...GOm), **dadurch gekennzeichnet, daß** die numerische Steuerung durch Verwendung von Zyklen eine Ablaufsteuerung (MZ) umfaßt, nach der für jede Bearbeitungsaufgabe zugehörige Arbeitsgänge (TO1...TOn) und Positionselemente (GO1...GOm) abhängig von ihrer technologieabhängigen Reihenfolge im Bearbeitungsprogramm so abarbeitbar sind, daß alle Zyklen für einen Arbeitsgang jeweils als modaler Zyklus ausgewählt werden, wobei für jeden Zyklus für ein Bearbeitungsobjekt nacheinander alle Zyklen für ein Positionselement (GO1...GOm) ausgewählt werden und jeweils eine Bearbeitung des entsprechenden Arbeitsganges (TO1...TOn) an der Position des jeweiligen Positionselements (GO1...GOm) erfolgt, bevor der folgende Zyklus für einen Arbeitsgang als modaler Zyklus ausgewählt wird.

2. Numerische Steuerung nach Anspruch 1, **dadurch gekennzeichnet, daß** ein Bearbeitungspuffer (B) vorgesehen ist, in den für jede Bearbeitungsaufgabe die Daten der zugehörigen Arbeitsgänge (TO1...TOn) und Positionselemente (GO1...GOm) einschreibbar sind.

3. Numerische Steuerung nach Anspruch 1 oder 2, **dadurch gekennzeichnet, daß** die Ablaufsteuerung (MZ) zum Zeitpunkt der Bearbeitungsprogrammabarbeitung im Echtzeitbetrieb arbeitet.

4. Numerische Steuerung nach einem der Ansprüche 1 bis 3, **dadurch gekennzeichnet, daß** Positionselemente (GO1...GOm) auch Positionsmuster (PM), insbesondere Positionsreihen, Positionsgitter oder Positionskreise, sowie Hindernisse beschreiben können.

5. Numerische Steuerung nach einem der Ansprüche 1 bis 4, **dadurch gekennzeichnet, daß** durch die Ablaufsteuerung (MZ) für auf unterschiedlichen Höhen liegende Positionselemente (GO1 ... GOM) in den Zyklen Rückzugsbewegungen auf eine globale Rückzugebene (RZE) vermeidbar sind, indem Rückpositionierungen nur bis auf eine lokale Sicherheitsebene (SE) des höher gelegenen Positionselementes erfolgen.

6. Numerische Steuerung nach einem der Ansprüche 1 bis 5, **dadurch gekennzeichnet, daß** Positionselemente (GO1...GOm) für unterschiedliche Arbeitsgänge (TO1...TOn) mehrfach nutzbar sind.

## Revendications

1. Commande numérique pour machines-outils, robots ou systèmes similaires, à possibilité de pilotage par un programme d'usinage avec des opérations de travail (TO1...TOn) spécifiques aux outils et des éléments de position (GO1...Gom),
**caractérisée en ce que** la commande numérique, par l'utilisation de cycles, englobe une commande séquentielle (MZ) selon laquelle pour chaque tâche d'usinage, des opérations de travail (TO1...TOn) et des éléments de position (GO1...GOm) associés peuvent être traités, en fonction de leur ordre subordonné à la technologie dans le programme d'usinage, de façon telle que tous les cycles pour une opération de travail soient sélectionnés respectivement en tant que cycle modal, et **en ce que** pour chaque cycle, pour un objet d'usinage, sont sélectionnés successivement tous les cycles pour un élément de position (GO1...GOm), et est effectué respectivement un usinage de l'opération de travail (TO1...TOn) correspondante, au niveau de la position de l'élément de position (GO1...GOm) respectif, avant que soit sélectionné le cycle suivant pour une opération de travail, en tant que cycle modal.

2. Commande numérique selon la revendication 1,
**caractérisée en ce qu'**il est prévu une mémoire tampon d'usinage (B) dans laquelle peuvent être inscrites pour chaque tâche d'usinage, les données des opérations de travail (TO1...TOn) et des éléments de position (GO1...GOm) associés.

3. Commande numérique selon la revendication 1 ou 2,
**caractérisée en ce que** la commande séquentielle (MZ) travaille en mode de fonctionnement en temps réel au moment du traitement de déroulement du programme d'usinage.

4. Commande numérique selon l'une des revendications 1 à 3,
**caractérisée en ce que** des éléments de position (GO1...GOm) peuvent également décrire des modèles de position (PM), notamment des rangées de position, des réseaux de position ou des cercles de position, ainsi que des obstacles.

5. Commande numérique selon l'une des revendications 1 à 4,
**caractérisée en ce que** grâce à la commande séquentielle (MZ), il est possible d'éviter dans les cycles, pour des éléments de position (GO1...GOm) situés à des hauteurs différentes, des mouvements de retrait sur un plan de retrait (RZE) global, par le fait que des positionnements de retrait ne sont effectués que jusque sur un plan de sécurité (SE) local de l'élément de position situé le plus haut.

6. Commande numérique selon l'une des revendications 1 à 5,
**caractérisée en ce que** des éléments de position (GO1...GOm) sont utilisables de façon multiple, pour différentes opérations de travail (TO1 ... TOn).

## Claims

1. Numerical control for machine tools, robots or the like which can be controlled by means of a machining program with tool-related machining operations (TO1...TOn) and position elements (GO1 ... GOm), **characterised in that** the numerical control comprises a sequence control (MZ) through the use of cycles, according to which sequence control machining operations (TO1...TOn) and position elements (GO1...GOm) associated with each machining task can be processed in the machining program as a function of their technology-dependent sequence in the machining program such that all of the cycles for an operation are each selected as a modal cycle, with all of the cycles for a position element (GO1...GOm) being selected consecutively for each cycle for a machining object and the respective operation (TO1...TOn) being executed in each case at the position of the respective position element (GO1...GOm) before the following cycle is selected for an operation as a modal cycle.

2. Numerical control according to claim 1,
**characterised in that** a machining buffer (B) is provided into which the data of the associated machining operations (TO1...TOn) and position elements (GO1...GOm) can be written for each machining task.

3. Numerical control according to claim 1 or 2,
**characterised in that** the sequence control (MZ) operates in real time at the time of execution of the machining program.

4. Numerical control according to one of the claims 1 to 3,
**characterised in that** position elements (TO1...TOn) can also describe position patterns (PM), in particular position series, position grids or position circles as well as obstacles.

5. Numerical control according to one of the claims 1 to 4,
**characterised in that** return motions onto a global return plane (RZE) during the cycles can be avoided by the sequence control (MZ) for position elements (GO1...GOm) located at different levels **in that** return positionings are only performed up to a local safety level (SE) of the position element located at a higher level.

6. Numerical control according to one of the claims 1 to 5,
**characterised in that** position elements (GO1...GOm) can be used multiple times for different machining operations (TO1...TOn).
